# EUROPEAN PATENT SPECIFICATION

(11) **EP 3 712 406 B1**
(45) Date of publication and mention of the grant of the patent: **10.07.2024**
(21) Application number: 20163927.5
(22) Date of filing: 18.03.2020
(51) Int. Cl.: F02C 7/22, F02C 7/236, F02C 7/32

(54) **BACKUP SYSTEM FOR DEMAND FUEL PUMPING SYSTEM**
SICHERUNGSSYSTEM FÜR EIN BEDARFSGESTEUERTES KRAFTSTOFFPUMPSYSTEM
SYSTÈME DE SAUVEGARDE POUR UN SYSTÈME DE POMPAGE DE CARBURANT À LA DEMANDE

(30) Priority: 20.03.2019 US 201962821025 P
(43) Date of publication of application: 23.09.2020
(73) Proprietor: RTX Corporation, Farmington, CT 06032 (US)
(72) Inventor: HERRING, Neal R., East Hampton, CT Connecticut 06424 (US); IKEDA, Michael K., West Hartford, CT Connecticut 06117 (US); COCKS, Peter, South Glastonbury, CT Connecticut 06073 (US)
(74) Representative: Dehns

(56) References cited:
- GB-A- 744 923
- US-A- 2 946 190
- US-A- 3 696 612
- US-A1- 2009 199 823
- US-A1- 2010 003 148
- US-A1- 2014 150 440
- US-A1- 2014 219 826
- US-A1- 2017 167 387
- US-A1- 2018 283 281

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-energy exhaust gas flow. The high-energy exhaust gas flow expands through the turbine section to drive the compressor and the fan section. The compressor section typically includes low and high pressure compressors, and the turbine section includes low and high pressure turbines.

Fuel supplied to the combustor is provided by a mechanical pump driven by a rotating shaft of the engine. The mechanical pump is reliable and supplies fuel in proportion to engine speed. The minimum capacity of the mechanical pump is sized such that sufficient fuel is provided for high power conditions and/or engine starting. Excess fuel not needed is recirculated within the fuel system or back to the fuel tank. The fuel is further utilized as a coolant for other systems of the engine. Recirculation of fuel increases the temperature of the fuel and thereby reduces the available capacity to absorb heat from other systems. The capacity of the fuel to absorb heat from other systems is further limited by the characteristics of the fuel. At a certain temperature, the fuel begins to degrade and create deposits in the fuel system that can degrade engine performance. Reducing the amount of fuel that is recirculated during engine operation may improve the capacity of the fuel to absorb heat from other systems.

Turbine engine manufacturers continuously seek improvements to engine performance including improvements to thermal, transfer and propulsive efficiencies.

US2017167387A1 discloses an aircraft fuel pumping arrangement comprising a first fuel pump, an electrically powered motor operable to drive the first fuel pump to deliver fuel to an outlet, a second fuel pump, a gas driven turbine operable to drive the second fuel pump to deliver fuel to the outlet, and a controller operable to control the operation of the gas driven turbine to determine the rate at which the second fuel pump is driven. The first and second fuel pumps are arranged to be used in combination during high engine load conditions to meet the fuel delivery and system pressure level requirements of the engine.

US3696612A describes a fuel pump system for a gas turbine in which a main fuel pump is normally driven by an electric motor powered from an external electrical network. An auxiliary fuel pump is connected in a parallel hydraulic circuit arrangement with the main fuel pump and is activated by a battery-driven motor or driven by a mechanical starting device for the turbine when it becomes necessary to "black start" the turbine with no external source of electrical power available for the main fuel pump.

Methods and systems of controlling a plurality of interrelated fuel feed pumps to effectuate a desired pumping cooperation of various pump units in accordance with particular operating conditions and demands are disclosed in US2946190A. The system includes an air driven first fuel pump energized by air from a compression means from the gas turbine engine, a second fuel pump, and a clutch drive for selectively activating said second pump.

US2014/150440A1 describes a gas turbine engine that includes, among other things, a propulsion assembly situated to rotate about an engine central axis. Operation of the propulsion assembly requires a first amount of fluid during a first operating condition and a second, greater amount of the fluid during a second operating condition. A first pump is operatively associated with a low speed spool that rotates with a low pressure turbine. The first pump has a first fluid delivering capacity corresponding to at least the first amount. A second pump has a second fluid delivering capacity configured to correspond to at least a difference between the first amount and the second amount. The first pump provides the fluid for propulsion assembly during the first and second operating conditions and the second pump provides the fluid for propulsion assembly operation only during the second operating condition.

### SUMMARY

A fuel system for a gas turbine engine according to an aspect of the present invention comprises a primary fuel pump providing fuel flow during engine operation and a primary electric motor coupled to the primary fuel pump for driving the primary fuel pump during engine operation. A secondary system provides fuel flow in the absence of fuel flow from the primary fuel pump. The secondary system comprises a secondary pump powered by a hydraulically powered turbine.

In an embodiment of any of the above embodiments, the fuel system comprises a first and second valve, in which the first valve is upstream of the secondary pump and the second valve is downstream of the secondary pump for controlling fuel flow from the secondary pump.

A gas turbine engine comprises a fan rotatable within a fan nacelle and a core engine that includes a compressor communicating compressed air to a combustor where compressed air is mixed with fuel and ignited to generate a high-energy gas flow expanded through a turbine, and a fuel system in an embodiment of any of the above embodiments. A method of supplying fuel to a combustor of a gas turbine engine according to an aspect of the present invention comprises a primary fuel pump driven by an electric motor to provide a first fuel flow that varies independent of a speed of shaft driven by a turbine of the engine. A second fuel flow is generated with a secondary system in response to the electric motor not driving the primary fuel pump sufficiently to power the engine. A secondary pump generates the second fuel flow and the secondary pump is powered by a hydraulically powered turbine independent of the primary fuel pump.

Although the different examples have the specific components shown in the illustrations, embodiments of this invention are not limited to those particular combinations. These and other features disclosed herein can be best understood from the following specification and drawings, the following of which is a brief description.

### BRIEF DESCRIPTION OF THE DRAWINGS

Figure 1 is a schematic view of an embodiment of a gas turbine engine according to the present invention
Figure 2 is a schematic view of a second embodiment of a fuel system embodiment according to the present invention.

### DETAILED DESCRIPTION

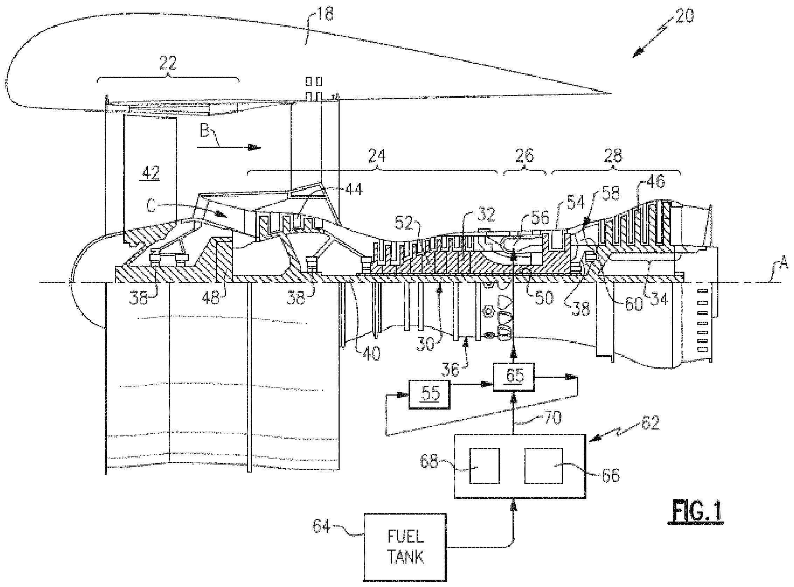

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 18, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including but not limited to three-spool architectures and low bypass engines.

The exemplary engine 20 generally includes a low speed spool 30 and a high speed spool 32 mounted for rotation about an engine central longitudinal axis A relative to an engine static structure 36 via several bearing systems 38. It should be understood that the various bearing systems 38 may alternatively or additionally be provided at different locations, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to a fan section 22 through a speed change mechanism, which in the illustrated embodiment of gas turbine engine 20 is illustrated as a geared architecture 48 to drive fan blades 42 at a lower speed than the low speed spool 30. The high speed spool 32 includes an outer shaft 50 that interconnects a second (or high) pressure compressor 52 and a second (or high) pressure turbine 54. A combustor 56 is arranged in a gas turbine 20 between the high pressure compressor 52 and the high pressure turbine 54. A mid-turbine frame 58 of the engine static structure 36 may be arranged generally between the high pressure turbine 54 and the low pressure turbine 46. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 58 includes airfoils 60 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor 44 and the fan blades 42 may be positioned forward or aft of the location of the geared architecture 48 or even aft of turbine section 28.

The engine 20 in one embodiment of the present invention is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five 5. The low pressure turbine 46 pressure ratio is pressure measured prior to the inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3 and less than about 5. It should be understood, however, that the above parameters are only exemplary of one embodiment of a geared architecture engine and that the present invention is applicable to other gas turbine engines including but not limited to direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)] ^{0.5} (where °R = K x 9/5). The "Low corrected fan tip speed" as disclosed herein according to one non-limiting embodiment is less than about 1150 ft / second (350.5 meters/second).

The example gas turbine engine includes the fan section 22 that comprises in one non-limiting embodiment less than about 26 fan blades 42. In another non-limiting embodiment, the fan section 22 includes less than about 20 fan blades 42. Moreover, in one disclosed embodiment the low pressure turbine 46 includes no more than about 6 turbine rotors schematically indicated at 34. In another non-limiting example embodiment, the low pressure turbine 46 includes about 3 turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

Fuel is delivered to the combustor 56 by a fuel system 62. The fuel system 62 includes a primary system 66 and a back-up or secondary system 68. Fuel from a fuel tank 64 is pumped to a desired pressure and provided to the combustor 56. The disclosed fuel system 62 tailors a flow of fuel 70 to the combustor 56 based on engine operating conditions. Instead of simply providing a fuel flow that provides for extremes of operating demands, the disclosed fuel system 62 varies the flow of fuel 70 according to a demand for fuel. By tailoring the flow of fuel to engine operating demand, a fuel recirculation loop for excess fuel can be reduced and/or eliminated.

Fuel is utilized as a heat sink to cool other flows within the engine such as lubricant and air flows. In this example, a heat fuel/oil heat exchanger 65 cools a flow of lubricant generated by a lubricant system 55. Recirculation of fuel results in an increased temperature of the fuel and thereby a reduced capability to accept heat from other engine systems, such as the example lubricant system 55.

The disclosed fuel system 62 varies the flow of fuel 70 based on demand to reduce and/or eliminate the recirculation of fuel and thereby increase the ability to accept heat from other engine systems.

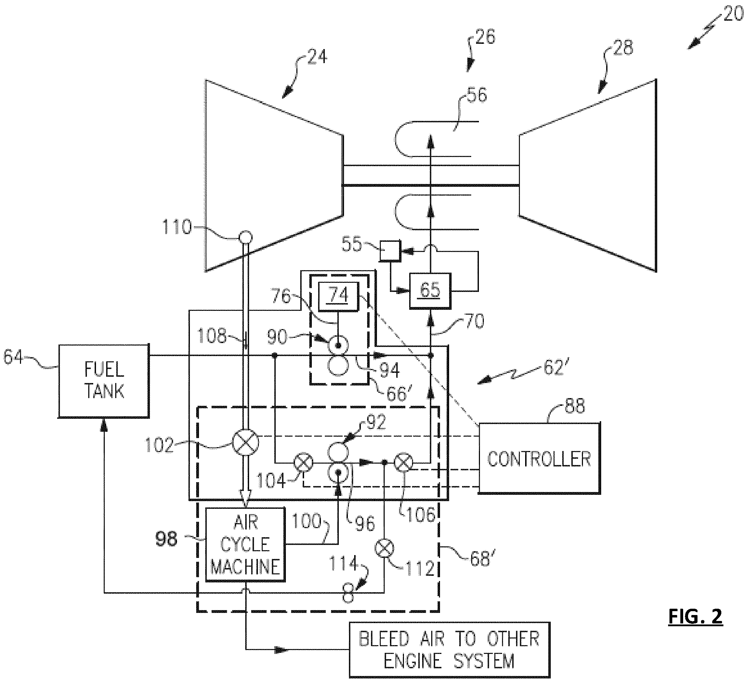

Referring to Figure 2, with continued reference to Figure 1, an example fuel system embodiment is schematically shown and indicated at 62'. The example fuel system 62' includes a secondary system 68' that includes a secondary pump 92 powered by a secondary drive 98. In this disclosed example, the secondary drive 98 is an air cycle machine driven by bleed airflow 108 drawn from a tap 110 from the compressor section 24 of the engine 20.

The air cycle machine 98 is driven by the bleed airflow 108 obtained from the compressor location 110. The air cycle machine uses the bleed airflow 108 for other aircraft systems including environmental control system and cooling systems for hot sections of the engine 20. The air cycle machine 98 is coupled to a secondary pump 92 by a shaft 100, shown schematically. The secondary pump 92 is disposed in a secondary passage 96 including a first control valve 104 upstream of the secondary pump 92 and a second control valve 106 downstream of the secondary pump 92. Fuel flow within the secondary passage 96 is closed during routine operation of the primary fuel pump 90. A bleed air control valve 102 controls operation and speed of the air cycle machine and thereby of the shaft 100 driving the secondary pump 92.

Because the air cycle machine 98 is operable during engine operation to provide bleed airflow to other engine systems, the mechanical connection through the shaft 100 continually drives the secondary pump 92. However, because the control valves 104 and 106 are normally in a closed position, the secondary pump 92 is not in communication with fuel and does not contribute to fuel flow to the combustor 56. An evacuation system pump 114 is in selective communication with the secondary passage 96 to exhaust fuel from the secondary pump 92 when not in use. In one disclosed example, a control valve 112 controls communication between the evacuation system 114 and the secondary passage 96. Once the control valves 104 and 106 are closed, the control valve 112 opens to enable the evacuation system 114 to evacuate fuel back to the fuel tank 64. The evacuation system 114 could then be turned off once fuel is evacuated from the secondary pump 92 and the secondary passage 96.

In the event that the electric motor 74 is no longer able to drive the primary fuel pump 90 and thereby provide fuel flow through the first fuel passage 94, the first and second control valves 104 and 106 are opened to allow the secondary pump 92 to supply a flow of fuel to the combustor 56. The flow of fuel provided by the secondary fuel pump 92 can be varied by adjusting a flow of bleed airflow with the bleed air control valve 102.

Operation of the engine 20 with reference to the Figures is therefore provided according to a disclosed method of supplying fuel to the combustor 56 by driving the primary fuel pump 72, 90 with the electric motor 74 to provide the fuel flow 70 that varies independent of a speed of the shafts 40, 50 driven by the turbine section 28. Because the pump 72, 90 is not mechanically coupled to the shafts 40, 50, the pump 72, 90 can be operated in a variable manner based on a demand for fuel. Accordingly, the flow of fuel can be reduced for applicable engine operating conditions to reduce and/or eliminate the need for recirculation of excess fuel flow. The decoupling of the engine speed from fuel flow enables an improved match between pump operation and actual demand of fuel flow. The reduced or eliminated recirculation of excess of fuel reduces the overall temperature of the fuel flow and thereby increases the heat acceptance capacity of the fuel flow.

In the event that the electric motor 74 becomes incapable of driving the primary pump 72, 90, the disclosed secondary systems 68, 68' provide for the generation of a second fuel flow by either driving the primary fuel pump 72, or driving a secondary fuel pump 90. A secondary drive in the form of a hydraulically powered turbine 78 or an air cycle machine 98 provide the power to continue the flow of fuel 70 to the combustor 56.

Accordingly, the disclosed fuel systems provide a varied flow to match engine demand during operation that enables an increased heat acceptance capacity of the fuel while maintaining operation with a secondary drive system to assure uninterrupted fuel flow.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A fuel system (62) for a gas turbine engine (20) comprising:
a primary fuel pump (72) providing fuel flow (70) during engine operation;
a primary electric motor (74) coupled to the primary fuel pump (72) for driving the primary fuel pump (72) during engine operation; and
a secondary system (68) providing fuel flow (70) in the absence of fuel flow from the primary fuel pump (72); and
**characterized in that**
the secondary system (68) comprises a secondary pump (92) powered by a hydraulically powered turbine.

2. The fuel system as recited in claim 1, including a first valve (104) upstream of the secondary pump (92) and a second valve (106) downstream of the secondary pump (92) for controlling fuel flow from the secondary pump (92).

3. A gas turbine engine (20) comprising:
a fan (42) rotatable within a fan nacelle (18);
a core engine including a compressor (24) communicating compressed air to a combustor (26) where compressed air is mixed with fuel and ignited to generate a high-energy gas flow expanded through a turbine (28); and
a fuel system (62) according to claim 1 or 2.

4. A method of supplying fuel to a combustor (26) of a gas turbine engine (20) comprising:
driving a primary fuel pump (72) with an electric motor (74) to provide a first fuel flow (70) that varies independent of a speed of shaft driven by a turbine (28) of the engine (20); and
generating a second fuel flow with a secondary system (68) in response to the electric motor (74) not driving the primary fuel pump (72) sufficiently to power the engine (20), wherein a secondary pump (92) generates the second fuel flow; and
**characterized in that**
the secondary pump (92) is powered by a hydraulically powered turbine independent of the primary fuel pump (72).

## Patentansprüche

1. Kraftstoffsystem (62) für ein Gasturbinentriebwerk (20), umfassend:
eine primäre Kraftstoffpumpe (72), die während des Betriebs des Triebwerks einen Kraftstoffstrom (70) bereitstellt;
einen primären Elektromotor (74), der mit der primären Kraftstoffpumpe (72) gekoppelt ist, um die primäre Kraftstoffpumpe (72) während des Betriebs des Triebwerks anzutreiben; und
ein sekundäres System (68), das einen Kraftstoffstrom (70) in Abwesenheit eines Kraftstoffstroms von der primären Kraftstoffpumpe (72) bereitstellt; und
**dadurch gekennzeichnet, dass**
das sekundäre System (68) eine sekundäre Pumpe (92) umfasst, die von einer hydraulisch betätigten Turbine betätigt wird.

2. Kraftstoffsystem nach Anspruch 1, beinhaltend ein erstes Ventil (104) stromaufwärts der sekundären Pumpe (92) und ein zweites Ventil (106) stromabwärts der sekundären Pumpe (92) zum Steuern des Kraftstoffstroms von der sekundären Pumpe (92) .

3. Gasturbinentriebwerk (20), umfassend:
einen Lüfter (42), der innerhalb einer Lüftergondel (18) drehbar ist;
ein Kerntriebwerk, das einen Verdichter (24) beinhaltet, der verdichtete Luft zu einer Brennkammer (26) kommuniziert, wo verdichtete Luft mit Kraftstoff gemischt und gezündet wird, um einen hochenergetischen Gasstrom zu erzeugen, der durch eine Turbine (28) expandiert wird; und
ein Kraftstoffsystem (62) nach Anspruch 1 oder 2.

4. Verfahren zum Zuführen von Kraftstoff zu einer Brennkammer (26) eines Gasturbinentriebwerks (20), umfassend:
Antreiben einer primären Kraftstoffpumpe (72) mit einem Elektromotor (74), um einen ersten Kraftstoffstrom (70) bereitzustellen, der unabhängig von einer Drehzahl der von einer Turbine (28) des Triebwerks (20) angetriebenen Welle variiert; und
Generieren eines zweiten Kraftstoffstroms mit einem sekundären System (68) als Reaktion darauf, dass der Elektromotor (74) die primäre Kraftstoffpumpe (72) nicht ausreichend antreibt, um das Triebwerk (20) zu betätigen, wobei eine sekundäre Pumpe (92) den zweiten Kraftstoffstrom generiert; und
**dadurch gekennzeichnet, dass**
die sekundäre Pumpe (92) durch eine hydraulisch betätigte Turbine unabhängig von der primären Kraftstoffpumpe (72) betätigt wird.

## Revendications

1. Système de carburant (62) pour un moteur à turbine à gaz (20) comprenant :
une pompe à carburant primaire (72) fournissant un débit de carburant (70) pendant le fonctionnement du moteur ;
un moteur électrique primaire (74) couplé à la pompe à carburant primaire (72) pour entraîner la pompe à carburant primaire (72) pendant le fonctionnement du moteur ; et
un système secondaire (68) fournissant un débit de carburant (70) en l'absence de débit de carburant provenant de la pompe à carburant primaire (72) ; et
**caractérisée en ce que**
le système secondaire (68) comprend une pompe secondaire (92) alimentée par une turbine hydraulique.

2. Système de carburant selon la revendication 1, comprenant une première vanne (104) en amont de la pompe secondaire (92) et une seconde vanne (106) en aval de la pompe secondaire (92) pour commander le débit de carburant provenant de la pompe secondaire (92) .

3. Moteur à turbine à gaz (20) comprenant :
une soufflante (42) pouvant tourner à l'intérieur d'une nacelle de soufflante (18) ;
un moteur central comprenant un compresseur (24) communiquant de l'air comprimé à une chambre de combustion (26) où l'air comprimé est mélangé avec du carburant et allumé pour générer un flux de gaz à haute énergie détendu à travers une turbine (28) ; et
un système de carburant (62) selon la revendication 1 ou 2.

4. Procédé d'alimentation en carburant d'une chambre de combustion (26) d'un moteur à turbine à gaz (20), comprenant :
l'entraînement d'une pompe à carburant primaire (72) avec un moteur électrique (74) pour fournir un premier débit de carburant (70) qui varie indépendamment de la vitesse de l'arbre entraîné par une turbine (28) du moteur (20) ; et
la génération d'un second débit de carburant avec un système secondaire (68) en réponse au fait que le moteur électrique (74) n'entraîne pas suffisamment la pompe à carburant primaire (72) pour alimenter le moteur (20), dans lequel une pompe secondaire (92) génère le second débit de carburant ; et
**caractérisée en ce que**
la pompe secondaire (92) est alimentée par une turbine hydraulique indépendante de la pompe à carburant primaire (72).
